# NEUE EUROPÄISCHE PATENTSCHRIFT

(11) **EP 1 086 013 B2**
(45) Veröffentlichungstag und Bekanntmachung des Hinweises auf die Entscheidung über den Einspruch: **27.12.2006**
(45) Hinweis auf die Patenterteilung: 02.10.2002
(21) Anmeldenummer: 99924632.5
(22) Anmeldetag: 11.06.1999
(51) Int. Cl.: B62D 65/00, B62D 25/06

(54) **DACHGRUPPE UND BASISSTRUKTUR EINES STRASSENFAHRZEUGS**
ROOF UNIT AND BASIC UNIT FOR A ROAD VEHICLE
ENSEMBLE TOIT ET ENSEMBLE BASE D'UN VEHICULE ROUTIER

(30) Priorität: 18.06.1998 CH 130998
(43) Veröffentlichungstag der Anmeldung: 28.03.2001
(73) Patentinhaber: Alcan Technology & Management AG, 8212 Neuhausen am Rheinfall (CH); Johnson Controls Headliner GmbH, 42285 Wuppertal (DE)
(72) Erfinder: WIESCHERMANN, Jochen, D-88682 Salem (DE); DEFLORIN, Duri, CH-8805 Richterswil (CH); MÜLLER, Wolfgang, D-66701 Beckingen (DE)
(86) Internationale Anmeldenummer: PCT/CH1999/000254
(87) Internationale Veröffentlichungsnummer: WO 1999/065759

(56) Entgegenhaltungen:
- EP-A1- 0 250 678
- EP-A2- 0 170 086
- EP-B- 0 203 484
- EP-B- 0 300 889
- WO-A1-99/16659
- DE-A- 2 140 365
- DE-A- 3 725 807
- DE-A- 3 820 845
- DE-A1- 2 952 510
- DE-A1- 3 540 814
- DE-A1- 3 809 456
- DE-U- 7 907 617
- DE-U1- 7 929 367
- US-A- 4 902 068
- VDI-Bericht Nr:1264(1996): Moduldachsystem für eine Kundengerechte Fahrzeugindividualisierung (Weissbrich, Entenmann, Danzl)

## Beschreibung

Vorliegende Erfindung betrifft ein Verfahren zur Fertigung einer Karosserie mit einer Dachgruppe, enthaltend eine aussenliegende Dachhaut und einen nach innen weisenden Dachhimmel oder eine aussenliegende Dachhaut und einen nach innen weisenden Dachhimmel mit einem Dachhimmelrahmen, wobei die Dachgruppe als Montagegruppe ausgebildet ist, und eine Basisstruktur, und der Dachhimmel und die Dachhaut mit der Basisstruktur, an ihren gegenseitigen Fügestellen, aufeinander abgestimmte Anschlusskonfigurationen aufweisen, für eine horizontal gefügte Karosserie eines Strassenfahrzeuges, und bestimmte Dachgruppen.

Es ist bekannt, dass bei Fertigungskonzepten für Kraftfahrzeuge, Einzelmodule getrennt komplettiert werden können. Dies betrifft insbesondere die gesamte Stirnwand einschliesslich Cockpit. Weiter wurde in Horst Pippert, Karosserietechnik, Vogel-Fachbuch, Vogel Buchverlag, Würzburg, 1989, Seiten 242 und 244, beschrieben, dass die horizontale Trennung von Dach- und Bodengruppe sinnvoll sein kann. Vor dem endgültigen Zusammenbau können Einzelmontagen an der Bodengruppe leicht durchgeführt werden. In der EP-B 0 250 678 wird ein Verfahren zur Herstellung einer horizontal getrennten Kraftfahrzeugkarosserie beschrieben.

Aus der DE 79 29 367 U ist ein Dachaufbau für Kraftfahrzeuge bekannt, aus einer Dachaussenhaut und einem Dachrahmen, die eine Baugruppe bilden, welche an den Säulen der Karosserie befestigbar ist. Die Dachaussenhaut ist längs ihrer Ränder mit einem Halbzeugprofilrahmen verbunden, der an den Säulen der Karosserie befestigt wird.
EP 0 300 889 bildet dem Oberbegriff der Ansprüche 4 und 5, US 4,902,068 bildet dem Oberbegriff für die Ansprüche 1 und 2.

Die Arbeitsweise der getrennt Fertigung der Dach- und Bodengruppe, resp. Basisstruktur, wurde in der seriellen Fertigung kaum aufgegriffen, da das Fügen und Verbinden des Daches mit der Bodengruppe schwierig oder zumindest aufwendig ist und die Gesamtstabilität einer Karosserie und damit ihre Strukturfestigkeit gegenüber einer Karosserie, mit bis ans Dach reichenden Seitenwänden, verschlechtert wird.

Nachteilig bei den Fertigungsmethoden von Rohkarosserien aus Bodengruppe und den Aussenblechen ist, dass für die nachfolgende Ausrüstung der Karosserie, beispielsweise alle im Bereich des Daches und der Fenstersäulen angeordneten Einbauteile, vom Innenraum her, an- oder eingefügt werden müssen. An einer fertigen Rohkarosserie sind die Bewegungsräume für Mensch und Maschine eng. Dadurch wird Handarbeit mühsam und auch roboterisierte Arbeitsabläufe lassen sich fallweise nicht implementieren.

Aufgabe vorliegender Erfindung ist es, ein Verfahren zur Fertigung einer Karosserie mit einer Dachgruppe und einer Bodengruppe, resp. Basisstruktur, für eine horizontal gefügte Karosserie eines Strassenfahrzeuges vorzuschlagen, wobei die Dachgruppe eine einfache Fertigung ermöglicht und das Fügen von Dachgruppe und Basisstruktur auf einfache Weise, insbesondere bei der Serienfertigung am Band, ermöglicht wird.

Erfindungsgemäss wird dies durch ein Verfahren gemäss den Ansprüchen 1,2 und 4 und durch bestimmte Dachgruppen gemäss Anspruchs erreicht.

Vorzugweise trägt zumindest die Aussenseite der Dachgruppe ganz oder teilweise, zumindest an den von aussen sichtbaren, resp, an den der Witterung ausgesetzten, Teilen eine Lackierung. Die Lackierung kann eine einoder mehrschichtige Lackierung aus z.B. Grundierung, Füller, Decklack und/oder Klarlack usw. sein. D.h. die Lackierung kann bereits vor dem Fügen von Basisstruktur und Dachgruppe an der Dachgruppe aufgebracht sein.

Der Dachgruppe kann beispielsweise die Dachhaut oder die Dachhaut mit Längs- und/oder Querträger(n) und den Dachhimmel und gegebenenfalls einen Dachhimmelrahmen enthalten. Die Dachgruppe kann auch ein im wesentlichen einstückiges Formteil, die Dachhaut und den Dachhimmel bildend, darstellen. Im weiteren kann die Dachgruppe Anschlusskonfigurationen für die Längsrahmen, die Querrahmen und/oder die Seitenwandsäulen, wie A-, B-, C- und falls vorhanden D etc.-Säulen, Fensterrahmen, insbesondere für feststehende Fenster oder rahmenlose Seitenfenster in den Türen, enthalten. Die Dachgruppe kann auch Einbauteile, wie Schiebe-, Hub-, Falt- und Lamellendächer, oder starre oder bewegliche Glasdächer und deren Rahmenteile, sowie Antriebselemente dazu, Dachrelings, Dachantennen und Innenausbauten, wie Bezugsmaterialien, Dachhaltegriffe, Sonnenblenden, Innenbeleuchtung, Verkabelungen, Bedien- und Anzeigeelemente, Airbag-Module für Seiten-Airbag, Fenster-Airbag, Kopf/Schulter-Airbag etc. enthalten.

Die Bodengruppe oder Basisstruktur kann beispielsweise in beliebig vorgerüsteten Zustand vorliegen. Bevorzugt ist die Bodengruppe oder Basisstruktur bezuglich der Inneneinrichtung -- wie Verkabelungen, Bodenbelag, Sitze, Bedienungselemente, Armaturen usw. weitgehend fertiggestellt, um weitere Arbeitsprozesse im durch Fügung von Dach- und Bodengruppe oder Basisstruktur gebildeten Fahrzeuginnenraum zu minimieren.

Die Dachhaut, wie auch der Dachhimmelrahmen, können ein- oder mehrteilig sein und aus verschiedenartigen Werkstoffen gefertigt sein. Geeignete Werkstoffe sind Metalle, Kunststoffe, oder Kombinationen davon. Bevorzugte. Metalle sind Eisenmetalle und Nichteisenmetalle, insbesondere Leichtmetalle. Zur Gruppe der Leichtmetalle sind Aluminium und dessen Legierungen und Magnesium und dessen Legierungen zu zählen. Die Dachhaut aus Metall kann als Blech oder auch -- insbesondere bei Aluminium oder Magnesium -- als geschäumter Formkörper oder Strangpressprofil vorliegen. Dachhimmelrahmen können z.B, aus Metall, insbesondere Aluminium oder Magnesium und deren Legierungen sein und als Stanz-, Pressoder Strangpressteil vorliegen. Beispiele von Werkstoffen für Dachhäute, Dachhimmel und Dachhimmelrahmen aus der Reihe der Kunststoffe sind Polyamide, einschliesslich Polyamiden aus aromatisierten Diaminen und aromatischen Dicarbonsäuren (Aramide), Polyester. Epoxyharze, Polyurethane, Polyvinylchloride, Polycarbonate, Acrylnitril-Styrol-Copolymere, Acrylnitril-Butadien-Styrol-Copolymere (ABS), Polyolefine usw. Die Kunststoffe können faserverstärkte Kunststoffe, wie glas- oder karbonfaserverstärkte Kunststoffe sein. Die Kunststoffe können Füllstoffe enthalten. Die Kunststoffe können in geschäumter oder ungeschäumter Form, sowohl in geschlossenzelliger als auch in offenzelliger Form und sowohl als Hart-, als auch als Weichschaumstoff, vorliegen. Die Dachhaut, der Dachhimmel und der Dachhimmelrahmen können auch eine Kombination von Metallen und Kunststoffen, wie Verbundwerkstoffe, auch Laminate oder Sandwichs genannt, sein. Die Verbundwerkstoffe können verschiedene Kunststoffschichten oder wenigstens aus einem Blech oder Profil aus Metall und wenigstens einer Kunststoffschicht sein. Der Dachhimmelrahmen kann ein Formteil aus Kunststoff, wie ein Spritzgussteil, ein geschäumter Formkörperoder aus Metall, insbesondere Leichtmetallen, wie Aluminium-oder Magnesium, als Press-, Stanz-, Druckgussoder Strangpressprofilteil oder einer Kombinationen aus Kunststoff und Metall sein. Der Dachhimmelrahmen kann lackiert oder mit einem Bezug versehen sein.

Die Dachhaut kann in Form eines Laminates vorliegen, mit einer die Aussenseite bildenden Metall- oder Kunststoffschicht und, nach innen weisend, wenigstens einer geschäumten oder ungeschäumten Kunststoffschicht. Die Dachhaut und der Dachhimmel und gegebenenfalls der Dachrahmen als gemeinsames Formteil oder einzeln als separate Formteile, können auch Formteile aus Integralschaumstoff aus einer geschlossenen massiven Randzone, die im inneren kontinuierlich in eine feine Porenstruktur übergeht, sein. Zwischen Dachhaut und Dachhimmel oder als Dachhimmel oder innerhalb eines Dachhautlaminates können fallweise auch Fasermatten aus Glas-, Baumwoll-, Wolle-, Flachs- oder Kokosfasern usw. angeordnet sein. Insbesondere Laminate können auf optimale Resonanzschwingungstilgung und Schalldämmung durch die Wahl der Schichtdicken und Werkstoffe ausgerichtet sein.

Der Dachhimmel kann ein Bezug aus beispielsweise Leder, Kunstleder, Textilien, Kunststofffolien usw. sein. Die genannten Materialien können auch auf z.B. einem formgebenden Träger aus Kunststoff, Metall, Schaumstoffmatten, Schaumstoffformkörpern, gehärteten Fasermatten usw. aufgezogen sein. Der Dachhimmel kann beispielsweise auch ein Formteil aus Kunststoff, geschäumtem Kunststoff oder aus Integralschaumstoff, wie z.B. weiter oben für die Dachhaut genannt, sein. Der Dachhimmel kann ein Sandwichaufbau aus einer mittleren Schicht aus Schaumstoff, z. B. Polyurethanschaumstoff, ein- oder beidseitig angeordneten Fasermatten oder Vliesen aus Glasfasern usw., und ein- oder beidseitig angeordneten Kunststofffolien, Abdeckfolien und/oder dekorativen oder funktionellen Bezügen enthalten. Der Dachhimmel kann auch einen Dachhimmelrahmen umfassen.

Die Basisstruktur schliesst nach oben mit dem Dachrahmen aus beispielsweise seitlichen Längsrahmen oder seitlichem Längsrahmen und dazwischen angeordneten hinterem und vorderem Querträger oder mit den Seitenwandsäulen oder mit den Seitenwandsäulen und hinterem und vorderem Querträger ab.

Zweckmässig enthält die Dachgruppe die Dachhaut mit den Anschlusskonfigurationen an den Dachrahmen, wie einen Längsrahmen und/oder an einen vorderen und hinteren Querträger und/oder an die Seitenwandsäulen, wie A-, C- und falls vorhanden B- und D etc.-Säulen.

Die Dachhaut kann beispielsweise auch ein einstückiges Formteil mit Anschlusskonfigurationen an den Dachrahmen, Querträger und/oder die Seitenwandsäulen, wie A-, C- und falls vorhanden B- und D- etc.-Säulen sein.

Bevorzugt enthält die Dachgruppe eine Dachhaut und einen Dachhimmelrahmen mit seitlich an der Dachhaut angeordneten Längsträgern und/oder vorderem und hinterem Querträgern. In anderer bevorzugter Ausführungsform enthält die Dachgruppe die Dachhaut und den Dachhimmelrahmen, wobei der Dachhimmelrahmen ein einstückiges Formteil ist.

Zweckmässig enthält die Dachhaut und/oder der Dachhimmelrahmen Einbauteile. Die Einbauteile umfassen beispielsweise eines oder mehrere der nachfolgend aufgeführten Teile: den Dachhimmelbezug, andere Innenraumverkleidungen, Aufprallpolster, Sonnenblenden, Innenrückspiegel, Innenbeleuchtung, Verkabelungen, Bedien- und Anzeigeelemente, Schiebe-, Hub-, Falt-, Lamellen- und Glasdächer und deren Rahmenteile, sowie entsprechende Antriebselemente, Dachhaltegriffe usw. Die Dachhaut kann auch, nach aussen gerichtet, Abstützpunkte für Antennen, Dachaufbauten, wie Dachträger oder Dachrelings aufweisen.

Besonders bevorzugt sind Dachrahmen oder Seitenwandsäulen resp. Querträger, mit Verbindungselementen, an die entsprechende Anschlusskonfigurationen am Dachhimmel oder der Dachhaut festgelegt werden können. Geeignete Anschlusskonfigurationen an Dachrahmen oder Seitenwandsäulen resp. Querträger sind Schraub-, Niet-, Rast-, Clip- oder Steckverbindungen etc. Beispielsweise können die Befestigungsmittel für die Dachhaltegriffe und/ oder die Sonnenblenden die Anschlusskonfigurationen der Dachgruppe darstellen.

Zur den Verkabelungen der Dachgruppe gehören insbesondere Steckverbindungen, die sich vorzugsweise an den gegenseitigen Fügestellen der Boden- und Dachgruppe befinden und ihre Fortsetzung in den entsprechenden Verkabelungen, mit korrespondierenden Steckverbindungen, in der Basisstruktur wiederfinden.

Vorliegende Erfindung umfasst auch die Fertigung der horizontal gefügten Karosserie aus Dachgruppe und Basisstruktur.

Die Fertigung wird beispielsweise derart ausgeführt, dass die Basisstruktur beispielsweise bezüglich der Innenausstattung, wie Sitze, Armaturen, Bedienungselemente usw. weitgehend fertiggestellt wird. Die Basisstruktur endet oben z.B. mit den seitlichen Längsrahmen und einem --bezogen auf das Dach - vorderen und hinteren Querträger. Durch die Öffnung der Heck- oder Frontscheibe wird der Dachhimmel, der fallweise einen Dachhimmelrahmen enthält, eingeschoben und durch eine Bewegung nach oben mit der Anschlusskonfiguration an den seitlichen Längsrahmen und/oder vorderen und hinteren Querträgern zusammengeführt und dort festgelegt. Der Dachhimmel kann bereits Einbauteile enthalten. Der Dachhimmel kann über die Anschlusskonfigurationen, wie Schraub- oder Steckverbindungen, die beispielsweise für das Festlegen der Dachhandgriffe und/oder der Sonnenblenden etc., mit den Längsrahmen und/oder den Querträgern verbunden werden. Danach können fallweise weitere Einbauteile zugefügtwerden. In einem weiteren Schritt wird die Dachhaut durch Absenken auf die entsprechende Anschlusskonfiguration an den seitlichen Längsrahmen und den vorderen und hinteren Querrahmen und trennfestern Verbinden damit, festgelegt. Die Dachhaut kann durch Kleben, Schweissen, Schrauben, Nieten, Klemmen, Einklinken, Clinchen oder einer Kombination der Verbindungsartenfestgelegt werden. Schweissverfahren sind insbesondere das Reibschweissen, MIG-, TIG- oder Laserschweissen.

Die Fertigung wird in anderer Art so ausgeführt, dass die Basisstruktur beispielsweise bezüglich der Innenausstattung, wie Sitze, Armaturen, Bedienungselemente usw. weitgehend fertiggestellt wird. Die Basisstruktur oben endet z.B. mit den seitlichen Längsrahmen und einem - bezogen auf das Dach -- vorderen und hinteren Querträger. Durch die Öffnung der Heck- oder Frontscheibe wird der Dachhimmelrahmen eingeschoben und durch eine Bewegung nach oben mit der Anschlusskonfiguration an den seitlichen Längsrahmen und/oder vorderen und hinteren Querträgem zusammengeführt und dort festgelegt. Der Dachhimmelrahmen kann bereits Einbauteile enthalten. Der Dachhimmelrahmen kann über die Anschlusskonfiguration, wie Schraub- oder Steckverbindungen, die beispielsweis efür die Dachhandgriffe und/oder die Sonnenblenden etc. enthalten sind, mit den Längsrahmen und/oder den Querträgern verbunden werden. Danach können fallweise weitere Einbauteile zugefügt werden. In einem weiteren Schritt wird der Dachhimmel auf den Dachhimmelrahmen abgesenkt und fallweise gegenseitig trennfest miteinander verbunden. Schliesslich wird die Dachhaut durch Absenken auf die entsprechende Anschlusskonfiguration an den seitlichen Längsrahmen und den vorderen und hinteren Querrahmen und trennfestern Verbinden damit, festgelegt. Die Dachhaut kann durch Kleben, Schweissen, Schrauben, Nieten, Klemmen, Einklinken oder einer Kombination der Verbindungsarten festgelegt werden. Es ist bei diesem Verfahren auch möglich, den Dachhimmel und die Dachhaut durch gegenseitiges Verbinden als Einheit vorzufertigen und diese Einheit auf den Dachhimmelrahmen und die entsprechende Anschlusskonfiguration an den seitlichen Längsrahmen und den vorderen und hinteren Querrahmen abzusenken und danach trennfest zu verbinden.

Die Fertigung wird in wieder anderer Art ausgeführt, dass die Basisstruktur beispielsweise bezüglich der Innenausstattung, wie Sitze, Armaturen, Bedienungselemente usw. weitgehend fertiggestellt wird. Die Basisstruktur oben endend z.B. mit den seitlichen Längsrahmen. Durch die Öffnung zwischen den beiden Längsrahmen wird die Dachgruppe, enthaltend die Dachhaut, den Dachhimmel oder den Dachhimmel und Dachhimmelrahmen, sowie einen vorderen und hinteren Querträger, jeweils fertig ausgerüstet mit den Einbauteilen, eingeschoben und durch eine Bewegung nach oben mit der Anschlusskonfiguration an den seitlichen Längsrahmen zusammengeführt und dort festgelegt. Der Dachhimmel oder Dachhimmelrahmen kann über die Anschlusskonfiguration, wie Schraub- oder Steckverbindungen, die beispielsweise für die Dachhandgriffe etc., enthalten sind, mit den Längsrahmen verbunden werden. Die Dachhaut wird durch eine weitere Anschlusskonfiguration, beispielsweise durch Formschluss, mit dem Längsrahmen verbunden. Die weitere Anschlusskonfiguration kann beispielsweise eine seitlich entlang der Seitenkanten der Dachhaut, laufende Rippe oder Rippen, resp. Wulst oder Wulste und entsprechend an den Längsrahmen laufende Nut oder Nuten resp.Rinne oder Rinnen. Vorzugsweise in Bereich des Formschlusses zwischen Rippe und Nut oder Wulst und Rinne können Klebe-und/oder Dichtmassen angeordnet sein. Befestigungsmöglichkeiten von Längsrahmen und Dachhaut im Bereich der Anschlusskonfiguration sind das Kleben, Schweissen, Klemmen, Clinchen, Nieten, Schrauben allein oder Kombination untereinander.

Klebeverbindungen können mittels Klebstoffen ausgeführt werden. Beispiele von Klebstoffen sind -- neben den physikalisch abbindenden Klebstoffen -- die besonders geeigneten chemisch abbindenden Klebstoffe. Zu den chemisch abbindenden Klebstoffen gehören die Reaktionsklebstoffe, wie die 2-Komponenten-Klebstoffe mit Epoxid-. harzen und Säureanhydriden, Epoxidharzen und Polyaminen, Polyisocyanate und Polyole oder die 1-Komponenten-Klebstoffe Cyanacrylate oder Methacrylate, die 2-Komponenten-Klebstoffe aus ungesättigten Polyestern und Styrol oder Methacrylaten, die 1-Komponenten-Klebstoffe aus Phenoplasten und Polyvinylacetalen oder Nitrilkautschuken, die 2-Komponenten-Klebstoffe aus Pyromellitsäureanhydrid und 4,4'-Diaminodiphenylether unter Bildung von Polyimiden oder aus Polybenzimidazolen. Klebstoffe, die duroplastische oder allenfalls elastische Verbindungen ausbilden sind vorzuziehen.

An den Berührungsflächen oder- kanten von Dachgruppe und Basisstruktur und von Dachhimmel und Dachhimmelrahmen können Klemm- und/oder Dichtprofile, Randprofile, Abschlussprofile usw. aus elastischen Materialien, Dichtstreifen oder Dichtmassen usw. vorgesehen werden.

Die erfindungsgemässen Dachgruppen finden bevorzugt für Strassenfahrzeug, wie Personenkraftwagen und dergl. oder die Führerkabinen von Lastkraftwagen Verwendung. Zu den Personenkraftwagen zählen beispielsweise 2- und 4- türige Limousinen, Coupés, Kombis, Vans und Kleinbusse.

Mit vorliegenden Dachgruppen gelingt es, die Basisstruktur weitgehend fertigzustellen, wobei das Dach vorerst offen bleibt und diese Dachöffnung als Zuführöffnung für Einbauteile und als Arbeitsraum erhalten bleibt. Dies ermöglicht eine rationelle Fertigung bei der Ausrüstung der Basisstruktur und eine anschliessend einfache Ergänzung der Basisstruktur durch die Dachgruppe.

Verschiedene Ausführungsbeispiele des Gegenstandes der Erfindung sind beispielhaft anhand der nachfolgenden Zeichnungen näher erläutert

Es ist folgendes dargestellt:
- Figuren 1 bis 4: Zeige die erste Ausführungsform der Montage einer Dachgruppe auf eine Basisstruktur wobei die Dachgruppe in mehreren Schritten auf eine Basisstruktur montiert wird.
- Figuren 5 bis 7: Zeigen in einer zweiten Ausführungsform die Montage einer Dachgruppe auf eine Basisstruktur wobei Dachhimmel und Dachhaut bereits vor der Montage auf die Basisstruktur eine Einheit bilden.
- Figuren 8 bis 13: Zeigen eine dritte Ausführungsform der Montage einer Dachgruppe auf eine Basisstruktur, wobei die Dachgruppe bereits den Dachhimmel, den Dachhimmelrahmen, die Dachhaut und die beiden Querträger etc. enthält und eine fertige Einheit bilden. Die Dachgruppe erfordert nebst der Montage auf die Basisstruktur keine weiteren Arbeitsschritte.

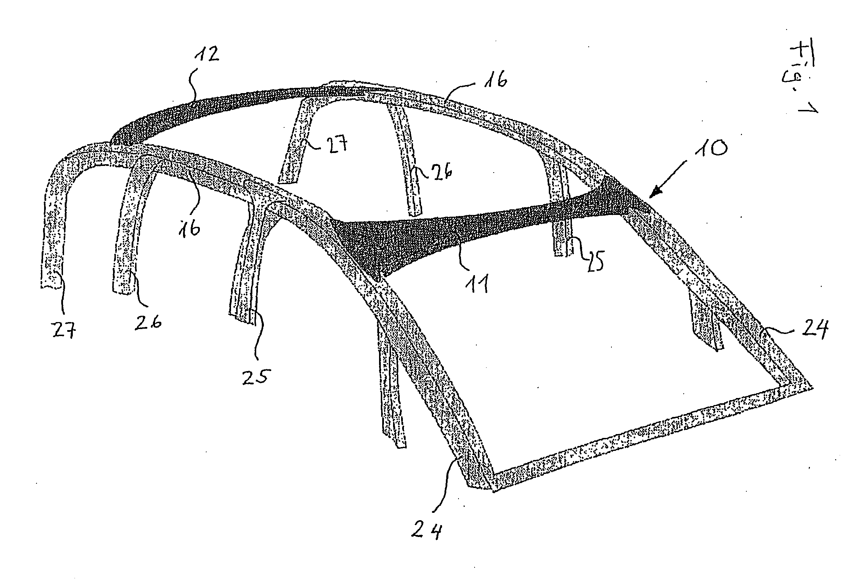

In der Figur 1 ist ein Basisstruktur 10 einer Fahrzeugkarosserie dargestellt, welche bereits die Seitenwandsäulen 24, 25, 26, 27, den vorderen und hinteren Querrahmen 11 und 12 and die Längsrahmen 16 enthält. Die Basisstruktur 10 kann noch weitere Bestandteile enthalten, diese sind aber für den Gegenstand der Erfindung nicht weiter von Bedeutung und werden deshalb nicht dargestellt.

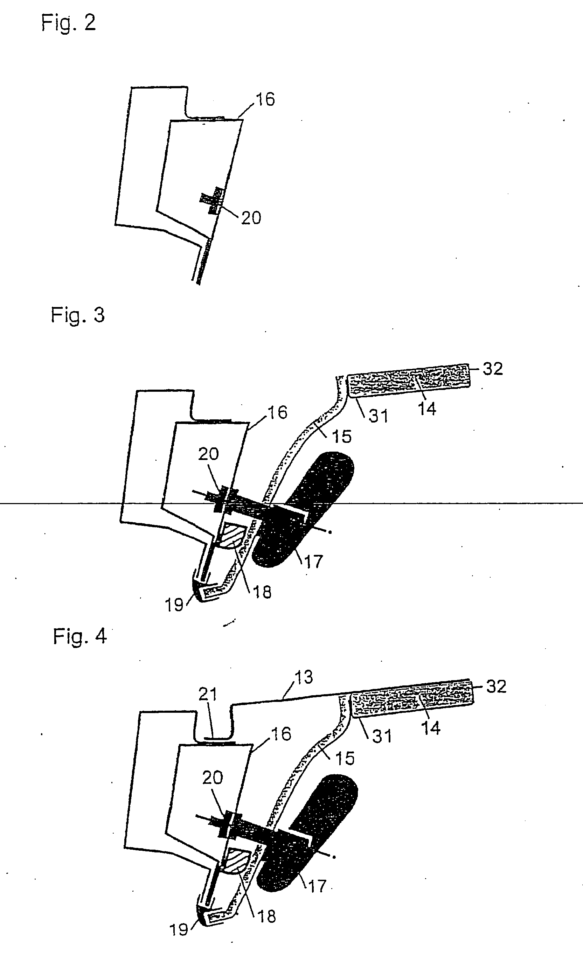

Figur 2 stellt einen Querschnitt eines Längsrahmen 16 dar, der seinerseits den oberen Abschluss der Basisstruktur 10 bildet. Der Längsrahmen enthält eine Profildichtung 19 und ein Verbindungselement 20, beispielsweise ein Innengewinde, eine Buchse usw. enthält. Bei der Fertigung der Karosserie wird an die weitgehend fertig gestellte Basisstruktur 10 die Dachgruppe eingefügt.

In der Figur 3 werden weitere Teile dargestellt, die in die Basisstruktur 10 eingebaut werden können, so der Dachhimmel 14, wie ein mit einem Bezug 31 überzogener z.B. geschäumter Formkörper, der Dachhimmelrahmen 15 und die Airbag-Module 18, beispielsweise für Seiten-Airbags, Fenster-Airbags oder Kopf/Schulter-Airbags. Bei der Fertigung wird der Dachhimmel 14 mit dem Dachhimmelrahmen 15 durch die Front- oder Heckscheibenöffnung eingeschoben und mit einer nach oben führenden Bewegung wird der Dachhimmelrahmen 15 an die Anschlusskonfiguration des Längsrahmens 16 geführt. Der Dachhimmelrahmen 15 wird -- als eine von verschiedenen möglichen Befestigungspunkten-- über die Verankerung des Dachhandgriffes 17, die am Verbindungselement 20 festgelegt ist, mit dem Längsrahmen 16 verbunden. Der untere Randbereich des Dachhimmelrahmens 15, wird von der Profildichtung 19 als Randabschluss aufgenommen. Soweit die Einbauteile nicht bereits am Dachhimmel 14 oder Dachhimmelrahmen 15 angebracht und somit eingebaut sind, können in dieser Fertigungstufe weitere Einbauteile im Bereich der Dachgruppe von oben montiert werden.

In Figur 4, ebenfalls als Querschnitt dargestellt, ist -- durch einen weiteren Fertigungsschritt - die Dachhaut 13 auf den Längsrahmen 16, der Teil der Basisstruktur 10 ist, aufgezogen. Die Dachhaut 13 kann von oben auf den Längsrahmen abgesenkt werden. Die Dachhaut 13 ist mit der Basisstruktur über die Längsrahmen 16, wie auch die in Figur 1 gezeigten Querrahmen 11 und 12, durch die Naht 21 durch z.B. Kleben und/oder Schweissen trennfest verbunden.

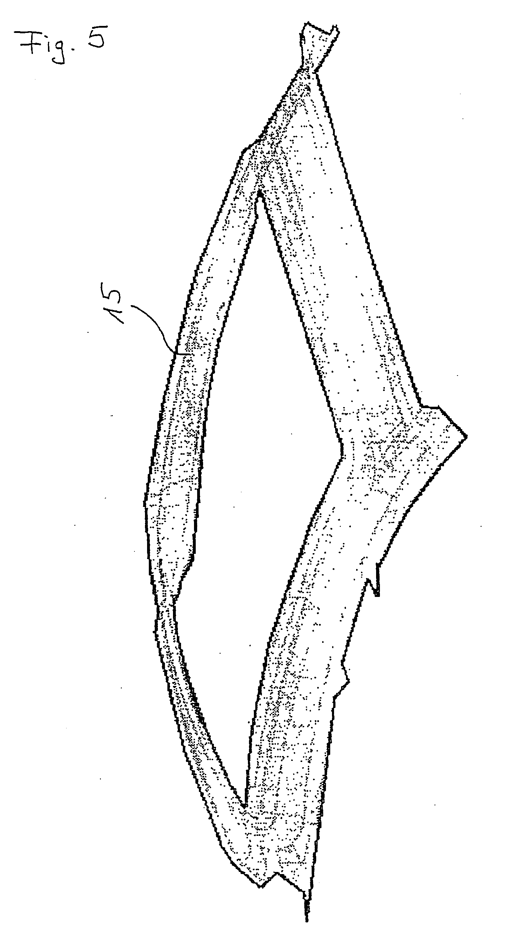

Die folgende Figur 5 zeigt den Dachhimmelrahmen 15, der ein- oder mehrteilig sein kann, vorzugsweise aber einteilig ist. Der Dachhimmelrahmen 15 kann beispielsweise ein Formkörper aus Metall, wie ein Druckgussteil, oder ein Schaumkörper, wie ein Integralschaumkörper, usw. sein.

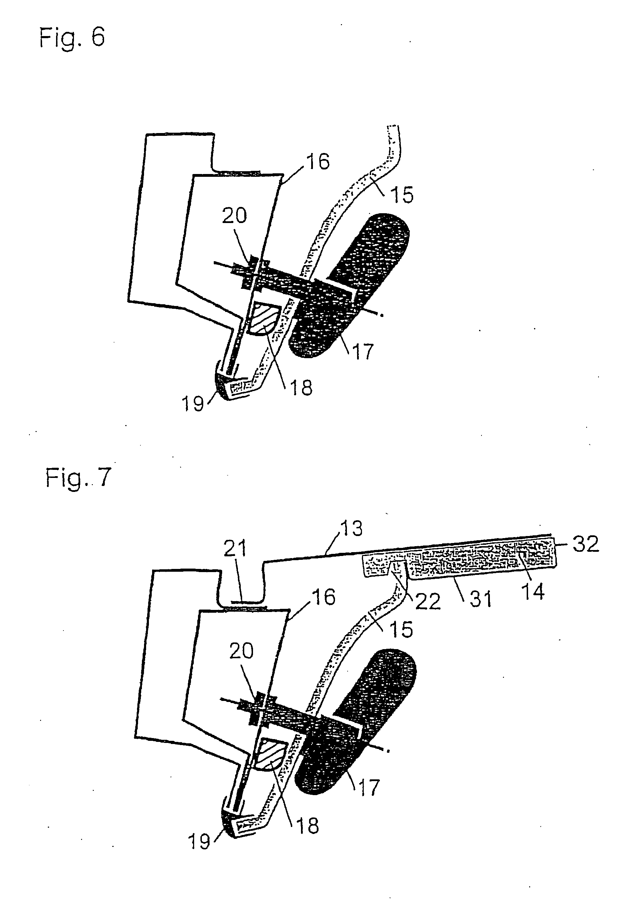

Figur 6 zeigt in einem Querschnitt einen Längsrahmen 16 der Basisstruktur 10, der Dachhimmelrahmen 15 mit dem Airbag-Modul 18 sind über das Verbindungselement 20, an welchem sich der Handgriff 17 abstützt, montiert. Der Dachhimmelrahmen ist an seinem unteren Rand in der profildichtung 19 aufgenommen. Der Dachhimmelrahmen 15 kann beispielsweise durch die Front- oder Heckscheibenöffnung in die Basisstruktur eingeführt und mit einer anhebenden Bewegung an die Anschlusskonfiguration des Längsrahmens 16 und der Querträger geführt werden. Der Dachhimmelrahmen 15 kann beispielsweise auch durch Verkanten und Absenken in die Basisstruktur eingeführt und anschliessend mit einer anhebenden Bewegung an die Anschlusskonfiguration des Längsrahmens 16 und der Querträger geführt werden.

Figur 7 stellt einen weiteren Montageschritt im Vergleich zu Figur 6 dar, wobei die aus einer Einheit bestehenden Dachhaut 13 samt Dachhimmel 14 auf den Dachhimmelrahmen 15 und den Dachrahmen (enthaltend die beiden Längsrahmen 16, den vorderen Querträger 11 und hinteren Querträger 12) gesetzt ist und an der Naht 21 durch z.B. Kleben und/oder Schweissen trennfest mit dem Dachrahmen verbunden ist.

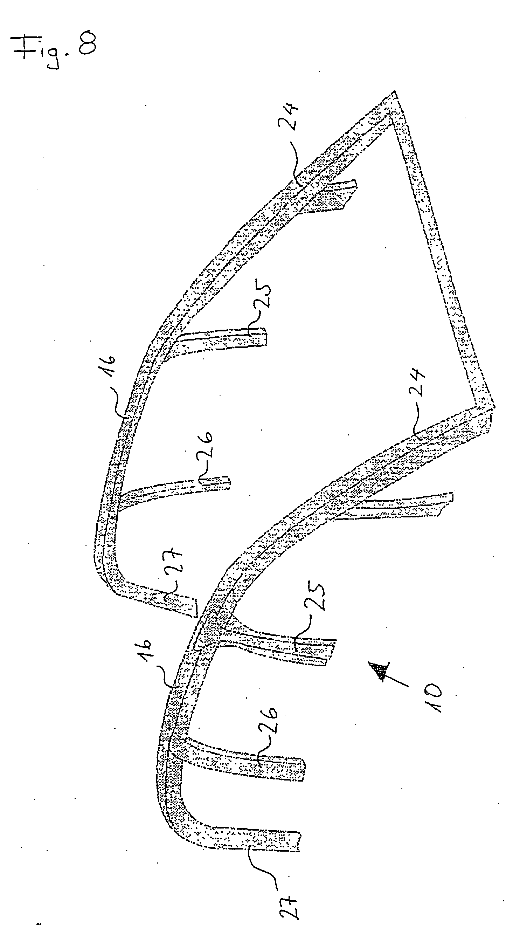

In Figur 8 sind die relevanten Teile einer Basisstruktur 10 einer Fahrzeugkarosserie dargestellt, samt Seitenwandsäulen 24, 25, 26, 27 und den Längsrahmen 16. Diese unterscheidet sich insofern von Figur 1, dass die vorderen und hinteren Querrahmen 11 und 12 fehlen.

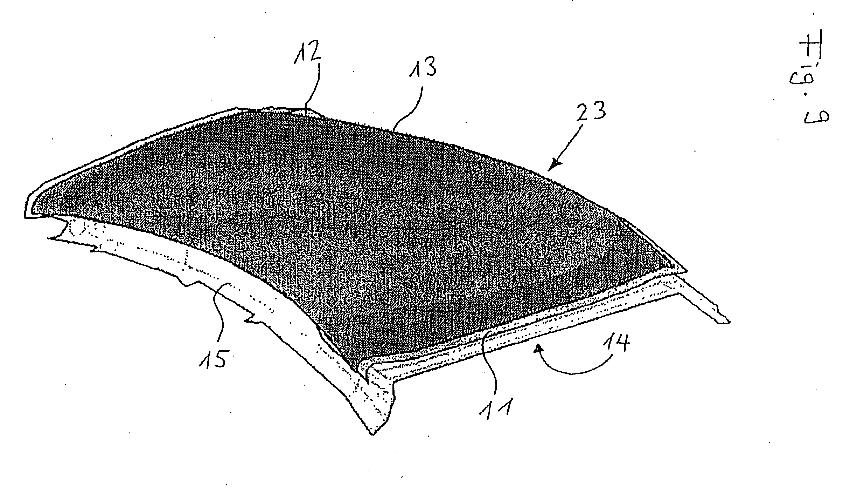

Figur 9 stellt eine fertig montierte Dachgruppe 23 mit Dachhimmel 14, Dachhimmelrahmen 15, Dachhaut 13, hinterem Querrahmen 12 und vorderem Querrahmen 11 dar. Die Dachgruppe 23 kann ebenfalls nicht weiter dargestellte Innenausbauten, wie Verkabelungen, Haltegriffe, Sonnenblenden, Innenbeleuchtung, Verkabelungen, Bedien- und Anzeigeelemente, Schiebe-, Hub-, Falt- und Lamellendächer, oder starre oder bewegliche Glasdächer und deren Rahmenteile sowie die Antriebselemente für bewegliche Dächer, enthalten.

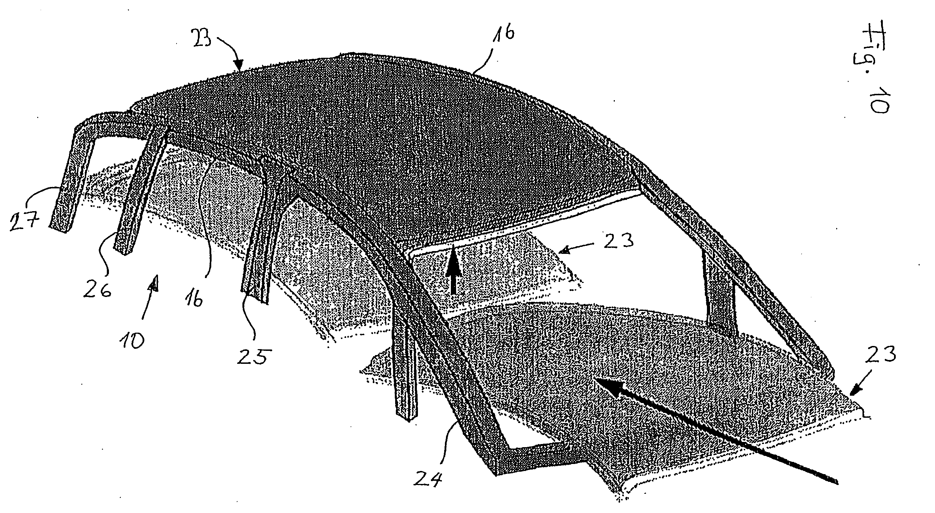

Figur 10 stellt die Montage der in Figur 9 beschriebenen fertigen Dachgruppe 23 in die Basisstruktur 10 dar. Dabei wird die Dachgruppe 23 z.B. von vorne zwischen den beiden A-Säulen 24 in Pfeilrichtung in die Fahrgastzelle eingeführt und anschliessend in Pfeilrichtung nach oben bewegt, bis sich die Dachgruppe 23 und die Basisstruktur 10 an den entsprechenden Fügestellen der Anschlusskonfiguration berühren.

Figur 11 stellt den Querschnitt eines der beiden Längsrahmen 16 vor dem Einpassen der Dachgruppe 23, gemäss Figur 10, dar.

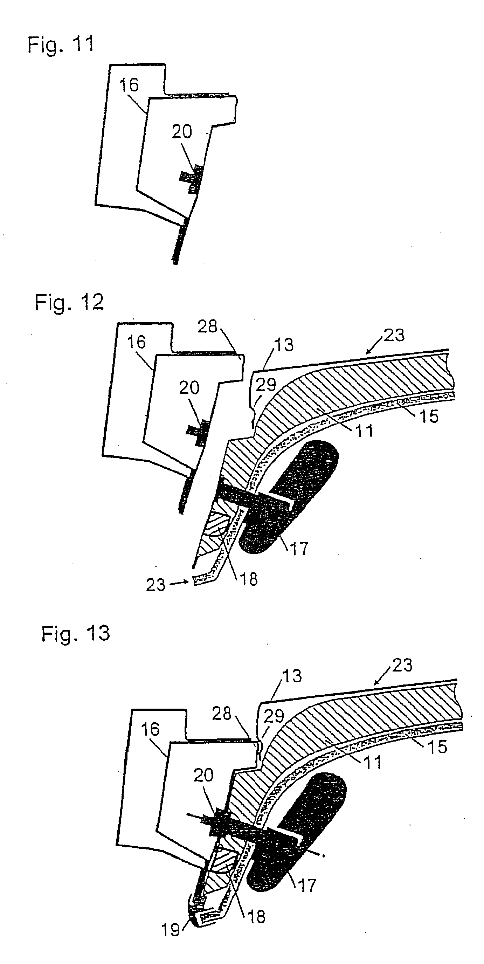

Die Figuren 12 und 13 stellen das vertikale Einpassen der Dachgruppe 23, gemäss Figur 10, im Querschnitt dar. Die Dachgruppe 23 wird an den Dachrahmen der Basisstruktur 10 gehoben bis sich diese berühren. Die Nut 29 und der korrespondierende Wulst 28 können über die ganze Länge der Dachgruppe 23 bzw. Längsträger 16 und Querträger 11, 12 vorgesehen sein. Beim weiteren Anheben der Dachgruppe 23 rasten der Wulst 28 in die Nut 29 ein. Diese erste Verbindung kann zusätzlich durch die Verbindung der Handgriffe 17 mit den Verbindungselementen 20 weiter fixiert werden. An den Fügestellen, wie im Bereich des Wulstes 28 und der Nut 29, kann zusätzlich eine weitere Verbindungstechnik angewendet und der Längsrahmen 16 mit der Dachhaut 13 z.B. verschweisst, verklebt, vernietet, verschraubt, verclipt usw. werden. Die weiteren nicht erwähnten Teile lassen sich sinngemäss über die Bezugsziffern den vorhergehenden Figuren entnehmen.

## Patentansprüche

1. Verfahren zur Fertigung einer Karosserie mit einer Dachgruppe (23), enthaltend eine aussenliegende Dachhaut (13) und einen nach innen weisenden Dachhimmel (14) oder eine aussenliegende Dachhaut (13) und einen nach innen weisenden Dachhimmel (14) mit einem Dachhimmelrahmen (15), wobei die Dachgruppe (23) als Montagegruppe ausgebildet ist, und eine Basisstruktur (10), und der Dachhimmel (14) und die Dachhaut (13) mit der Basisstruktur (10), an ihren gegenseitigen Fügestellen, aufeinander abgestimmte Anschlusskonfigurationen (30) aufweisen, für eine horizontal gefügte Karosserie eines Strassenfahrzeuges, wobei durch die Öffnung der Heck- oder Frontscheibe der Dachhimmel (14) eingeschoben und durch eine Bewegung nach oben mit der Anschlusskonfiguration (30) an seitlichen Längsrahmen (16) und/oder vorderen und hinteren Querträgern (11, 12) zusammengeführt und dort festgelegt wird
**dadurch gekennzeichnet, dass**
in einem weiteren Schritt die Dachhaut (13) durch Absenken auf die entsprechende Anschlusskonfiguration (30) an den seitlichen Längsrahmen (16) und den vorderen und hinteren Querrahmen (11, 12) und durch trennfestes Verbinden festgelegt wird.

2. Verfahren zur Fertigung einer Karosserie mit einer Dachgruppe (23), enthaltend eine aussenliegende Dachhaut (13) und einen nach innen weisenden Dachhimmel (14) oder eine aussenliegende Dachhaut (13) und einen nach innen weisenden Dachhimmel (14) mit einem Dachhimmelrahmen (15), wobei die Dachgruppe (23) als Montagegruppe ausgebildet ist, und eine Basisstruktur (10), und der Dachhimmel (14) und die Dachhaut (13) mit der Basisstruktur (10), an ihren gegenseitigen Fügestellen, aufeinander abgestimmte Anschlusskonfigurationen (30) aufweisen, für eine horizontal gefügte Karosserie eines Strassenfahrzeuges, wobei durch die Öffnung der Heck- oder Frontscheibe der Dachhimmelrahmen (15) eingeschoben und durch eine Bewegung nach oben mit der Anschlusskonfiguration (30) an seitlichen Längsrahmen (16) und/oder vorderen und hinteren Querträgern (11, 12) zusammengeführt und dort festgelegt wird
**dadurch gekennzeichnet, dass**
in einem weiteren Schritt der Dachhimmel (14) auf den Dachhimmelrahmen (15) abgesenkt und schliesslich die Dachhaut (13) durch Absenken auf die entsprechende Anschlusskonfiguration (30) an den seitlichen Längsrahmen (16) und den vorderen und hinteren Querrahmen (11, 12) und durch trennfestes Verbinden festgelegt wird.

3. Verfahren zur Fertigung einer Karosserie mit einer Dachgruppe (23) gemäss Anspruch 2, **dadurch gekennzeichnet, dass** der Dachhimmel (14) und die Dachhaut (13) durch gegenseitiges Verbinden als Einheit vorgefertigt und diese Einheit auf den Dachhimmelrahmen (15) und die entsprechende Anschlusskonfiguration (30) an den seitlichen Längsrahmen (16) und den vorderen und hinteren Querrahmen (11, 12) abgesenkt und danach trennfest verbunden wird.

4. Verfahren zur Fertigung einer Karosserie mit einer Dachgruppe (23), enthaltend eine aussenliegende Dachhaut (13) und einen nach innen weisenden Dachhimmel (14) oder eine aussenliegende Dachhaut (13) und einen nach innen weisenden Dachhimmel (14) mit einem Dachhimmelrahmen (15), wobei die Dachgruppe (23) als Montagegruppe ausgebildet ist, und eine Basisstruktur (10), und der Dachhimmel (14) und die Dachhaut (13) mit der Basisstruktur (10), an ihren gegenseitigen Fügestellen, aufeinander abgestimmte Anschlusskonfigurationen (30) aufweisen, für eine horizontal gefügte Karosserie eines Strassenfahrzeuges, wobei durch eine Öffnung zwischen den Längsrahmen (16) die Dachgruppe (23), enthaltend die Dachhaut (13) mit einer Anschlusskonfiguration (30), den Dachhimmel (14) oder den Dachhimmel (14) und den Dachhimmelrahmen (15), eingeschoben und durch eine Bewegung nach oben mit der Anschlusskonfiguration (30) an den seitlichen Längsrahmen (16) zusammengeführt und dort festgelegt wird,
**dadurch gekennzeichnet, dass**
die Dachgruppe (23), jeweils fertig ausgerüstet mit einem oder mehreren der Einbauteile aus der Reihe Dachhimmelbezug, Innenraumverkleidungen, Aufprallpolster, Sonnenblenden, Innenrückspiegel, Innenbeleuchtung, Bedien- und Anzeigeelemente, Schiebe-, Hub-, Falt-, Lamellen- und Glasdächer und deren Rahmenteile und Antriebselemente, an den Dachrahmen der Bodengruppe 10 gehoben bis sich diese berühren und eine Nut 29 und ein korrespondierender Wulst 28 über die ganze Länge der Dachgruppe 23 oder Längsrahmen 16 beim weiteren Anheben der Dachgruppe 23 einrastet.

5. Dachgruppe (23), enthaltend eine aussenliegende Dachhaut (13) und einen nach innen weisenden Dachhimmel (14) oder eine aussenliegende Dachhaut (13) und einen nach innen weisenden Dachhimmel (14) mit einem Dachhimmelrahmen (15), wobei die Dachgruppe (23) als Montagegruppe ausgebildet ist, und eine Basisstruktur (10), und der Dachhimmel (14) und die Dachhaut (13) mit der Basisstruktur (10), an ihren gegenseitigen Fügestellen, aufeinander abgestimmte Anschlusskonfigurationen (30) aufweisen, für eine horizontal gefügte Karosserie eines Strassenfahrzeuges,
**dadurch gekennzeichnet, dass**
der Dachhimmel (14) eines oder mehrere Einbauteile aus der Reihe Dachhimmelbezug, Innenraumverkleidungen, Aufprallpolster, Sonnenblenden, Innenrückspiegel, Innenbeleuchtung, Bedien- und Anzeigeelemente, Schiebe-, Hub-, Falt-, Lamellen- und Glasdächer und deren Rahmenteile und Antriebselemente und die Dachgruppe 23 einen Wulst 28 über die ganze Länge der Dachgruppe 23 oder Längsrahmen 16 enthält, wobei der Wulst 28 mit der Nut 29 des Längsrahmens korrespondiert, um in der Dachgruppe 23 einzurasten.

6. Dachgruppe (23) nach Anspruch 5, **dadurch gekennzeichnet, dass** der Dachhimmel (14) einen Sandwichaufbau aus einer mittleren Schicht aus Schaumstoff, ein- oder beidseitig angeordneten Fasermatten oder Vliesen aus Glasfasern und ein- oder beidseitig angeordneten Kunststofffolien, Abdeckfolien und/oder dekorativen oder funktionellen Bezügen enthält.

## Claims

1. Process for the production of a body comprising a roof unit (23) containing an external roof covering (13) and an inside roof lining (14) or an external roof covering (13) and an inside roof lining (14) with a roof lining frame (15), the roof unit (23) being in the form of a subassembly, and a base structure (10), the roof lining (14) and the roof covering (13) and the base structure (10) having matching connecting arrangements (30) at the points where they are to be assembled, for a horizontally assembled body of a road vehicle, the roof lining (14) being inserted through the opening of the rear window or windscreen and being brought together with the connecting arrangement (30) on lateral longitudinal frames (16) and/or front and rear cross members (11, 12) by an upward movement and fixed there, **characterised in that**, in a further step, the roof covering (13) is fixed by being lowered on to the corresponding connecting arrangement (30) on the lateral longitudinal frames (16) and the front and rear transverse frames (11, 12) and joined permanently thereto.

2. Process for the production of a body comprising a roof unit (23) containing an external roof covering (13) and an inside roof lining (14) or an external roof covering (13) and an inside roof lining (14) with a roof lining frame (15), the roof unit (23) being in the form of a subassembly, and a base structure (10), the roof lining (14) and the roof covering (13) and the base structure (10) having matching connecting arrangements (30) at the points where they are to be assembled, for a horizontally assembled body of a road vehicle, the roof lining frame (15) being inserted through the opening of the rear window or windscreen and being brought together with the connecting arrangement (30) on lateral longitudinal frames (16) and/or front and rear cross members (11, 12) by an upward movement and fixed there, **characterised in that**, in a further step, the roof lining (14) is lowered on to the roof lining frame (15) and finally the roof covering (13) is fixed by being lowered on to the corresponding connecting arrangement (30) on the lateral longitudinal frames (16) and the front and rear transverse frames (11, 12) and joined permanently thereto.

3. Process for the production of a body comprising a roof unit (23) according to claim 2, **characterised in that** the roof lining (14) and the roof covering (13) are joined together to form a prefabricated unit and this unit is lowered on to the roof lining frame (15) and the corresponding connecting arrangement (30) on the lateral longitudinal frames (16) and the front and rear transverse frames (11, 12) and then joined permanently thereto.

4. Process for the production of a body comprising a roof unit (23) containing an external roof covering (13) and an inside roof lining (14) or an external roof covering (13) and an inside roof lining (14) with a roof lining frame (15), the roof unit (23) being in the form of a subassembly, and a base structure (10), the roof lining (14) and the roof covering (13) and the base structure (10) having matching connecting arrangements (30) at the points where they are to be assembled, for a horizontally assembled body of a road vehicle, the roof unit (23) containing the roof covering (13) with a connecting arrangement (30), the roof lining (14) or the roof lining (14) and the roof lining frame (15) being inserted through an opening between the longitudinal frames (16) and being brought together with the connecting arrangement (30) on the lateral longitudinal frames (16) by an upward movement and fixed there, **characterised in that** the roof unit (23), already provided with one or more of the built-in fittings from the group consisting of inside roof lining, interior trim, airbags, sun visors, inside rear-view mirror, interior lighting, control and display elements, sliding, tilting, folding, louvre and glass roofs and frame parts thereof and driving elements, is raised towards the roof frame of the floor unit (10) until they come into contact and a groove (29) and a corresponding bead (28) over the entire length of the roof unit (23) or longitudinal frame (16) snap into place when the roof unit (23) is raised further.

5. Roof unit (23) containing an external roof covering (13) and an inside roof lining (14) or an external roof covering (13) and an inside roof lining (14) with a roof lining frame (15), the roof unit (23) being in the form of a subassembly, and a base structure (10), the roof lining (14) and the roof covering (13) and the base structure (10) having matching connecting arrangements (30) at the points where they are to be assembled, for a horizontally assembled body of a road vehicle,
**characterised in that** the roof lining (14) contains one or more built-in fittings from the group consisting of inside roof lining, interior trim, airbags, sun visors, inside rear-view mirror, interior lighting, control and display elements, sliding, tilting, folding, louvre and glass roofs and frame parts thereof and driving elements and the roof unit (23) contains a bead (28) over the entire length of the roof unit (23) or longitudinal frame (16), the bead (28) corresponding with the groove (29) in the longitudinal frame so that they snap into place in the roof unit (23).

6. Roof unit (23) according to claim 5, **characterised in that** the roof lining (14) contains a sandwich construction consisting of a middle layer of foam, fibre mats or non-woven materials of glass fibres arranged on one or both sides and plastic films, covering films and/or decorative or functional coatings arranged on one or both sides.

## Revendications

1. Procédé de fabrication d'une carrosserie avec un ensemble de toit (23) contenant une feuille de toit (13) extérieure et un plafond (14) tourné vers l'intérieur ou une feuille de toit (13) extérieure et un plafond (14) tourné vers l'intérieur et doté d'un encadrement de plafond (15), l'ensemble de toit (23) étant configuré comme groupe de montage, et une structure de base (10), le plafond (14), la feuille de toit (13) et la structure de base (10) présentant des configurations de raccordement (30) accordées l'une à l'autre à l'endroit de leur assemblage mutuel, pour une carrosserie à jonction horizontale d'un véhicule routier, où le plafond (14) est inséré par l'ouverture de la vitre arrière ou de la vitre avant et est assemblé par un déplacement vers le haut à la configuration de raccordement (30) prévue sur les longerons latéraux (16) et/ou sur les traverses avant et arrière (11, 12) et y est fixé, **caractérisé en ce que**, dans une étape suivante, la feuille de toit (13) est fixée par abaissement sur la configuration de raccordement (30) correspondante sur les longerons latéraux (16) et sur les traverses avant et arrière (11, 12) et par liaison inamovible.

2. Procédé de fabrication d'une carrosserie avec un ensemble de toit (23) contenant une feuille de toit (13) extérieure et un plafond (14) tourné vers l'intérieur ou une feuille de toit (13) extérieure et un plafond (14) tourné vers l'intérieur et doté d'un encadrement de plafond (15), l'ensemble de toit (23) étant configuré comme groupe de montage, et une structure de base (10), le plafond (14), la feuille de toit (13) et la structure de base (10) présentant des configurations de raccordement (30) accordées l'une à l'autre à l'endroit de leur assemblage mutuel, pour une carrosserie à jonction horizontale d'un véhicule routier, où l'encadrement de plafond (15) est inséré par l'ouverture de la vitre arrière ou de la vitre avant et est assemblé par un déplacement vers le haut à la configuration de raccordement (30) prévue sur les longerons latéraux (16) et/ou sur les traverses avant et arrière (11, 12) et y est fixé, **caractérisé en ce que**, dans une étape suivante, le plafond (14) est abaissé sur l'encadrement de plafond (15) et enfin la feuille de toit (13) est fixée par abaissement sur la configuration de raccordement (30) correspondante sur les longerons latéraux (16) et sur les traverses avant et arrière (11, 12) et par liaison inamovible.

3. Procédé de fabrication d'une carrosserie avec un ensemble de toit (23) selon la revendication 2, **caractérisé en ce que** le plafond (14) et la feuille de toit (13) sont préfabriqués en tant qu'entité par assemblage mutuel, et cette entité est abaissée sur l'encadrement de plafond (15) et la configuration de raccordement (30) correspondante sur les longerons latéraux (16) et les traverses avant et arrière (11, 12) pour y être ensuite reliée de façon inamovible.

4. Procédé de fabrication d'une carrosserie avec un ensemble de toit (23) contenant une feuille de toit (13) extérieure et un plafond (14) tourné vers l'intérieur ou une feuille de toit (13) extérieure et un plafond (14) tourné vers l'intérieur et doté d'un encadrement de plafond (15), l'ensemble de toit (23) étant configuré comme groupe de montage, et une structure de base (10), le plafond (14), la feuille de toit (13) et la structure de base (10) présentant des configurations de raccordement (30) accordées l'une à l'autre à l'endroit de leur assemblage mutuel, pour une carrosserie à jonction horizontale d'un véhicule routier, où l'ensemble de toit (23) contenant la feuille de toit (13) avec une configuration de raccordement (30), le plafond (14) ou le plafond (14) et l'encadrement de plafond (15), chacun équipé des composants, sont insérés par une ouverture entre les longerons (16) et sont assemblés par un déplacement vers le haut à la configuration de raccordement (30) prévue sur les longerons latéraux (16), pour y être fixés, **caractérisé en ce que** l'ensemble de toit (23), équipé d'un ou plusieurs composants sélectionnés parmi un revêtement de plafond, des habillages de l'espace intérieur, des coussins d'amortissement, des pare-soleil, un rétroviseur intérieur, un éclairage intérieur, des éléments d'actionnement et d'affichage, un toit ouvrant par coulissement, relèvement, repliage, un toit à lamelles ou un toit en verre et leurs pièces d'encadrement, ainsi que des éléments d'entraînement, est relevé au niveau de l'encadrement de toit de l'ensemble de plancher (10) jusqu'à ce que ceux-ci se touchent et une rainure (29) et un bourrelet (28) correspondant s'engagent sur toute la longueur de l'ensemble de toit (23) ou des longerons latéraux (16) lors du relèvement continué de l'ensemble de toit (23).

5. Ensemble de toit (23) contenant une feuille de toit (13) extérieure et un plafond (14) tourné vers l'intérieur ou une feuille de toit (13) extérieure et un plafond (14) tourné vers l'intérieur et doté d'un encadrement de plafond (15), l'ensemble de toit (23) étant configuré comme groupe de montage, et une structure de base (10), le plafond (14), la feuille de toit (13) et la structure de base (10) présentant des configurations de raccordement (30) accordées l'une à l'autre à l'endroit de leur assemblage mutuel, pour une carrosserie à jonction horizontale d'un véhicule routier,
**caractérisé en ce que**
le plafond (14) contient un ou plusieurs composants sélectionnés parmi un revêtement de plafond, des habillages de l'espace intérieur, des coussins d'amortissement, des pare-soleil, un rétroviseur intérieur, un éclairage intérieur, des éléments d'actionnement et d'affichage, un toit ouvrant par coulissement, relèvement, repliage, un toit à lamelles ou un toit en verre et leurs pièces d'encadrement, ainsi que des éléments d'entraînement et l'ensemble de toit (23) contient un bourrelet (28) sur toute la longueur de l'ensemble de toit (23) ou des longerons latéraux (16), où le bourrelet (28) correspond à la rainure (29) du longeron latéral pour s'engager dans l'ensemble de toit (23).

6. Ensemble de toit (23) selon la revendication 5, **caractérisé en ce que** le plafond (14) contient une structure en sandwich constituée d'une couche centrale de matière en mousse, des tapis de fibres ou des feutres en fibres de verre disposés d'un ou des deux côtés et des feuilles en matière synthétique, des feuilles de recouvrement et/ou des revêtements décoratifs ou fonctionnels disposés d'un ou des deux côtés.
